# EUROPEAN PATENT APPLICATION

(11) **EP 4 539 077 A1**
(43) Date of publication of application: **16.04.2025**
(21) Application number: 23818859.3
(22) Date of filing: 05.05.2023
(51) Int. Cl.: H01H 13/06

(54) **SWITCH ASSEMBLY FOR WATERPROOF PANEL**

(30) Priority: 09.06.2022 CN 202210650781
(71) Applicant: Shanghai Shift Electrics Co., Ltd., Shanghai 201506 (CN)
(72) Inventor: DAI, Xiaoguo, Shanghai 201506 (CN); XU, Zhenwu, Shanghai 201506 (CN)
(74) Representative: WSL Patentanwälte Partnerschaft mbB
(86) International application number: PCT/CN2023/092140
(87) International publication number: WO 2023/236694

(57) **Abstract**

The present invention provides a waterproof panel and switch assembly. The assembly includes: an outer housing portion, which includes an outer housing body and is located at an upper hole; a panel, which includes a panel body and a panel elastic portion positioned on the panel body; and an inner housing portion, which is arranged inside the outer housing portion and includes an inner housing body, an inner switch elastic portion fixed to the inner housing body, and a switch arranged in the inner housing portion. The panel further includes a panel pressing block enveloped by the panel elastic portion. The inner housing portion further includes an inner switch pressing block enveloped by the inner switch elastic portion. The panel pressing block is aligned with the inner switch pressing block, and the inner switch pressing block is aligned with the switch. A gap exists between the panel elastic portion and the inner switch elastic portion when the panel elastic portion of the panel is not subjected to a pressing force. The pressing force required by the switch in the present invention is significantly reduced while ensuring the waterproof performance of the panel and switch assembly, and the user's comfort in operating the switch is increased.

## Description

### Technical Field

The present invention relates to the technical field of personal care products, and in particular to a waterproof panel and switch assembly for a personal care product.

### Background Art

As the standard of living increases, the requirements for visualization of the state and information of personal care products are getting higher and higher, that is, the requirements for human-machine interaction are getting higher and higher. In order to improve the level of human-machine interaction of the products, a display screen is added to a personal care product, and is used to display various states of the personal care product such as battery capacity, operating mode and pressure range, and add some welcome interface and usage reports, among other things, thereby greatly enriching the human-machine interactive content of the product. With the addition of the display screen, it is necessary to add some reliable structures to the product to ensure waterproof sealing, so as to ensure that the display screen and related circuits can be used safely and reliably for a long time.

In order to accommodate the use of the display screen, a switch assembly of the personal care product includes a panel mounted on the top of the display screen. The panel is transparent, and a switch pressing portion made of an elastic portion is also mounted on the panel. In order to ensure that water does not penetrate into the interior of the panel from the outside, the elastic portion constituting the switch pressing portion is injection molded with the panel and has a certain thickness to ensure its durability and waterproof effect. However, a thicker switch pressing portion is not conducive to the transmission of a pressing force. Not only will the required pressing force be doubled, but the transmission of the pressing force will be less accurate, making the operation feel uncomfortable. However, if the thickness of the switch pressing portion is reduced, repeated operation of the switch pressing portion is likely to cause the elastic portion to be stripped relative to a panel body, which may lead to water leakage during use, seriously affecting the service life and safety of the product.

Moreover, for products such as electric toothbrushes, the panel is mounted on a generally cylindrical handle, and the panel and a part of the handle where the panel is mounted generally have an arc-shaped contour, so that it is difficult to make a durable, sealed connection between the panel and the part of the handle section that have an arc-shaped contour. For example, curved surfaces with radians will cause unreliable ultrasonic welding between the panel and an outer housing portion, and there may be a gap between the panel and the part of the handle, posing a safety hazard in terms of water leakage.

Therefore, there is a need to improve the existing waterproof panel and switch assembly to improve the user's operation feel while ensuring watertight reliability.

### Summary of the Invention

To overcome the problems of the waterproof panel and switch assembly in the prior art, the present invention provides a waterproof panel and switch assembly for a personal care appliance, the assembly including: an outer housing portion, which includes an outer housing body and a hole formed in the outer housing body; a panel, which includes a panel body and a panel elastic portion fixed to the panel body and is fitted in the hole; an inner housing portion, which is arranged in the outer housing portion and includes an inner housing body and an inner switch elastic portion fixed to the inner housing body; and a switch, which is arranged in the inner housing portion and below the inner switch elastic portion, wherein the panel further includes a panel pressing block enveloped by the panel elastic portion, the panel elastic portion being connected to the panel pressing block and the panel body, the inner housing portion further includes an inner switch pressing block enveloped by the inner switch elastic portion, the inner switch elastic portion being connected to the inner switch pressing block and the inner housing body, the panel pressing block and the inner switch pressing block are aligned with each other, and the inner switch pressing block and the switch are aligned with each other, wherein a gap exists between the panel elastic portion and the inner switch elastic portion when the panel elastic portion of the panel is not subjected to a pressing force.

According to an aspect of the present invention, a distance between the panel pressing block and the inner switch pressing block is less than 0.5 mm or the panel pressing block abuts against the inner switch pressing block when the panel elastic portion of the panel is not subjected to force.

According to another aspect of the present invention, the panel pressing block protrudes relative to an inside surface of the panel elastic portion, and/or the inner switch pressing block protrudes relative to an outside surface of the inner switch elastic portion.

According to still another aspect of the present invention, the panel is bonded or ultrasonically welded to the inner housing portion.

According to yet another aspect of the present invention, the panel pressing block and the inner switch pressing block are made of a first material, the panel elastic portion and the inner switch elastic portion are made of a second elastic material different from the first material, and the first material is substantially not deformed under the action of a force for operating the switch.

According to a further aspect of the present invention, the panel pressing block forms an identification symbol on an outer side of the panel, and the panel pressing block and the panel body are not connected to each other. Preferably, the inner switch pressing block is attached to the inner housing body.

According to a further aspect of the present invention, the assembly further includes a circuit board on which the switch is mounted, the circuit board being arranged in the inner housing portion.

According to a still further aspect of the present invention, a display screen is further mounted on the circuit board, the inner housing portion further includes an inner transparent portion at a position corresponding to the display screen, and the panel body is made of a transparent material.

According to a yet further aspect of the present invention, the inner housing portion further includes an inner transparent portion, the inner transparent portion is integrally injection molded with the inner housing body, and the inner housing body, the inner switch elastic portion, the inner switch pressing block and the inner transparent portion are injection molded to form a waterproof and sealed integral piece at a position corresponding to the hole of the outer housing portion.

According to another aspect of the present invention, the panel body, the panel elastic portion and the panel pressing block are injection molded to form a watertight integral piece.

The panel and switch assembly according to the present invention has both excellent watertight reliability and switch operability. Since the display screen is located inside the inner housing portion and the inner housing portion is made as an integral piece by injection molding, an external fluid cannot enter inside through the panel hole of the outer housing portion, so that the fluid cannot contact the display screen located inside, to protect the normal operation of the display screen. Moreover, the elastic portion for actuating the switch is formed by two thin elastic layers superposed with a gap. Therefore, compared to a conventional switch portion of a single layer of a thick elastic material, the pressing force required for the switch of the present invention is significantly reduced, and the user's comfort in operating the switch is increased.

### Brief Description of the Drawings

The present invention will be further described based on the exemplary embodiments shown in the drawings. The exemplary embodiments are given by way of non-limiting illustration. It should be noted that the drawings are only schematic representations of the embodiments of the present invention given by way of non-limiting examples.
FIG. 1 shows an exploded view of a waterproof panel and switch assembly according to a preferred embodiment of the present invention.
FIG. 2 shows a perspective view of the waterproof panel and switch assembly in a mounted state according to the preferred embodiment of the present invention.
FIG. 3 shows a partial cross-sectional perspective view of a panel according to a preferred embodiment of the present invention.

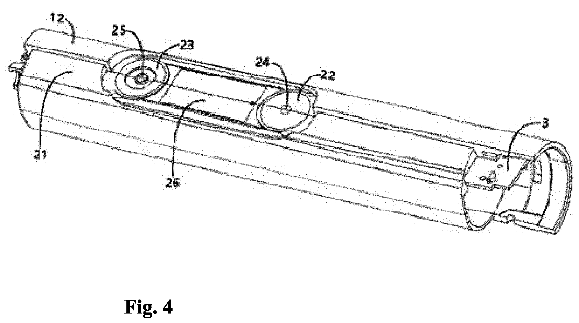

FIG. 4 shows a perspective view of an inner housing portion and a circuit board according to a preferred embodiment of the present invention.
FIG. 5 shows a cross-sectional perspective view of a panel and switch assembly according to a preferred embodiment of the present invention.

List of reference signs:
1 outer housing portion
11 hole
12 outer housing body
2 inner housing portion
21 inner housing body
22, 23 inner switch elastic portion
24, 25 inner switch pressing block
26 inner transparent portion
3 circuit board
31 display screen
32, 33 switch
4 panel
41 panel body
42, 44 panel elastic portion
43, 45 panel switch symbol
46, 47 panel pressing block
48 gap
49 gap
411 rib
5 double-sided adhesive layer
L1 longitudinal axis of a handle

### Detailed Description of Embodiments

Embodiments of a waterproof panel and switch assembly of the present invention will now be described with reference to the accompanying drawings.

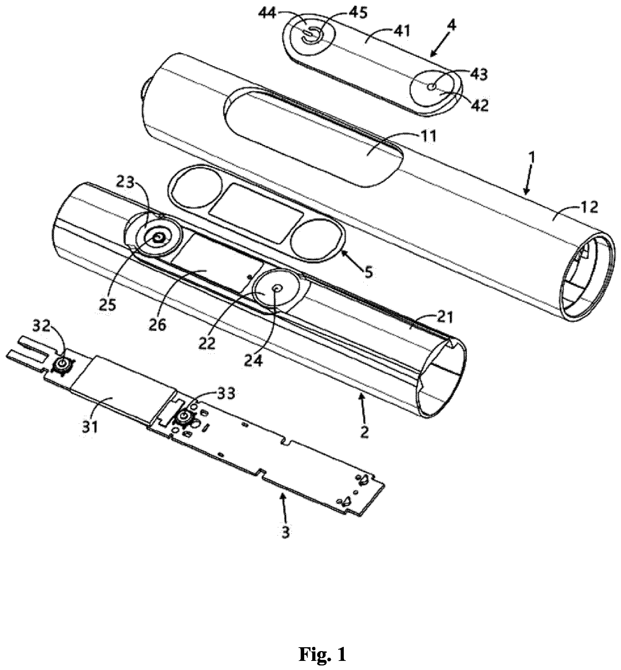

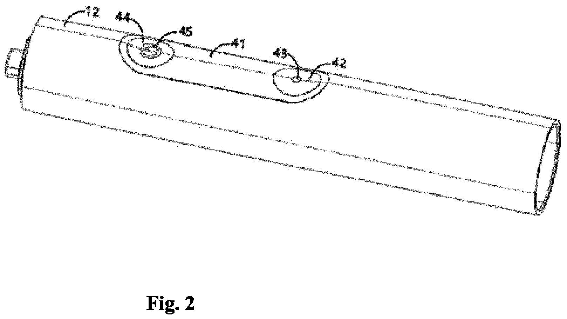

FIG. 1 shows a perspective view of a waterproof panel and switch assembly according to a preferred embodiment of the present invention in an exploded state, and FIG. 2 shows a perspective view of the waterproof panel and switch assembly in an assembled state. As an example, the waterproof panel and switch assembly may be used in an electric toothbrush. The assembly may also be used in other personal care appliances, such as electric shavers and oral irrigators, that require waterproof switch and panel assemblies.

As shown in FIG. 1, the waterproof panel and switch assembly mainly comprises an outer housing portion 1, a panel 4 and an inner housing portion 2. The waterproof panel assembly further includes switches 32 and 33. The switches 32, 33 are generally mounted on a circuit board 3.

The outer housing portion 1 and the inner housing portion 2 have matching shapes. In a preferred embodiment, the outer housing portion 1 has a substantially cylindrical shape, and the inner housing portion 2 also has a substantially cylindrical shape, the outer diameter of the cylinder of the inner housing portion 2 being equal to or slightly smaller than the inner diameter of the cylinder of the outer housing portion 1. The inner housing portion 2 fits snugly within the outer housing portion 1, thus forming a waterproof structure of a double-layer housing. Generally, the outer housing portion 1 and the inner housing portion 2 are molded to form an integral piece. The circuit board 3 with the switches 32, 33 mounted thereon is disposed in an inner cavity of the inner housing portion 2. In an example of the waterproof panel and switch assembly for an electric toothbrush, the cylindrical outer housing portion 1 is configured as a handle of the electric toothbrush.

The outer housing portion 1 includes an outer housing body 12 and a hole 11 formed in the outer housing body 12. As shown in FIG. 2, the panel 4 matches the hole 11 in the outer housing portion 1. In a preferred embodiment, the hole 11 in the outer housing portion 1 is formed in an oblong shape, with two ends in the direction of a longitudinal axis of the oblong shape being semicircular.

The inner housing portion 2 includes an inner housing body 21, inner switch elastic portions 22, 23, inner switch pressing blocks 24, 25, and an inner transparent portion 26. In a preferred embodiment, the inner switch elastic portions 22 and 23 have a circular outer contour and are spaced apart from each other by a distance. The inner transparent portion 26 is light transmissive. In a preferred embodiment, the inner transparent portion 26 is rectangular.

The inner switch pressing blocks 24 and 25 are enveloped by the inner switch elastic portions 22 and 23, respectively. That is, the inner switch pressing blocks 24, 25 are at least partially surrounded by the switch elastic portions 22, 23 and are connected to each other, and the switch elastic portions 22, 23 connect the inner switch pressing blocks 24, 25 to the inner housing body 21, so that the inner switch pressing blocks 24, 25 will be displaced with the elastic deformation of the elastic portions 22, 23 after being subjected to force. Preferably, as shown in FIG. 1, the inner switch pressing blocks 24 and 25 are positioned approximately in the middle of the inner switch elastic portions 22 and 23, and the inner switch pressing blocks 24 and 25 are positioned to be aligned with the switches 32 and 33 below the inner switch pressing blocks.

In a preferred embodiment, the two switches 32 and 33 are mounted on the circuit board 3 and spaced apart by a distance, and a display screen 31 is provided between the two switches 32 and 33. The display screen 31 is also mounted on the circuit board 3. The switches 32 and 33 are aligned with the pressing blocks 24 and 25, and the display screen 31 is positioned substantially in alignment with the inner transparent portion 26 of the inner housing portion 21.

The panel 4 mainly includes a panel body 41, panel elastic portions 42, 44, and panel pressing blocks 46, 47. In a preferred embodiment, the outer contour of the panel body 41 corresponds in shape to the inner contour of the hole 11, and the panel body 41 can be entirely mounted in the hole 11. In other alternative embodiments, the panel body 41 may be partially mounted in the hole 11.

The panel elastic portions 42, 44 have a circular outer contour. Preferably, the panel elastic portion panel elastic portions 42, 44 have a circular outer contour corresponding to the outer contour of the inner switch elastic portions 22, 23. The two panel elastic portions 42 and 44 are spaced apart by a distance and located at two ends of the panel body 41. The shortest distance between the two panel elastic portions 42 and 44 in the direction of a longitudinal axis L1 of the handle should be greater than the length of the display screen 31 in the direction of the longitudinal axis L1 of the handle, and the shortest distance between the inner switch elastic portions 22, 23 in the direction of the longitudinal axis L1 is correspondingly greater than the length of the display screen 31 in the direction of the longitudinal axis L1 of the handle, so that the content on the display screen 31 accommodated inside will not be obscured by the elastic portions 22, 23, 42, 44.

The panel pressing blocks 46 and 47 are enveloped by the panel elastic portions 42 and 44. In other words, the panel pressing blocks 46 and 47 are at least partially surrounded by the panel elastic portions 42 and 44 and are connected to each other, and the panel elastic portions 42 and 44 connect the panel pressing blocks 46 and 47 to the panel body 41, so that the panel pressing blocks 46 and 47 will be displaced with the elastic deformation of the elastic portions 42 and 44 after being subjected to force. Preferably, the panel pressing blocks 46 and 47 are enveloped at approximately the center of the panel elastic portions 42 and 44. Preferably, the panel pressing blocks 46 and 47 are not connected to the panel body 41.

The panel 4 further includes specific symbol portions 43, 45 which are injection molded on an outer side of the panel elastic portions 42 and 44 and exposed to the outside. Generally, the two symbol portions 43, 45 are different to indicate different operating functions. In a preferred embodiment, the symbol portions 43 and 45 are integrally injection molded with the panel pressing blocks 46 and 47. That is, the symbol portions 43, 45 are part of the panel pressing blocks 46 and 47. In other alternative embodiments, the symbol portions 43 and 45 may be independent of the panel pressing blocks 46 and 47, and the conforming portions 43 and 45 are independently molded from a selected material on the outer side of the panel elastic portions 42 and 44, or are formed on outer surfaces 42 and 44 of the elastic portions by printing.

The panel body 41 and the panel elastic portion 42 are made of different materials, and the panel body 41 and the panel pressing block 46, 47 are made of a harder material than the material of the panel elastic portion 42. The material of the panel elastic portion 42 is more elastic than the material of the panel body 41 and the panel pressing blocks 46 and 47.

The panel body 41 is generally made of plastic such as ABS, PC, PP, polymethyl methacrylate, PETG, etc. The panel elastic portions 42, 44 are generally made of elastic TPE, TPR, polyamide, etc. The panel pressing blocks 46, 47, the switch symbol portion 43, the panel switch symbol portion 45 are generally made of plastic such as ABS, PC, PP, polymethyl methacrylate, PETG, etc. Where the circuit board 3 is provided with a display screen 31, the panel body 41 is made of a light-transmitting material, so that the display screen 31 is visible from the outside.

When the panel 4, the outer housing portion 1 and the inner housing portion 2 are mounted together, the panel elastic portions 42, 44 are aligned with the inner switch elastic portions 22, 23 respectively **in** a pressing direction. In particular, the inner switch pressing blocks 24, 25 abut against the panel pressing blocks 46, 47, respectively, and there is no contact between the panel elastic portions 42, 44 and the inner switch elastic portions 22, 23 when the elastic portions 42, 44 on the panel 4 are not subjected to force, but gaps 48, 49 are formed. The gaps 48 and 49 are preferably sized between 0.5 mm and 1 mm.

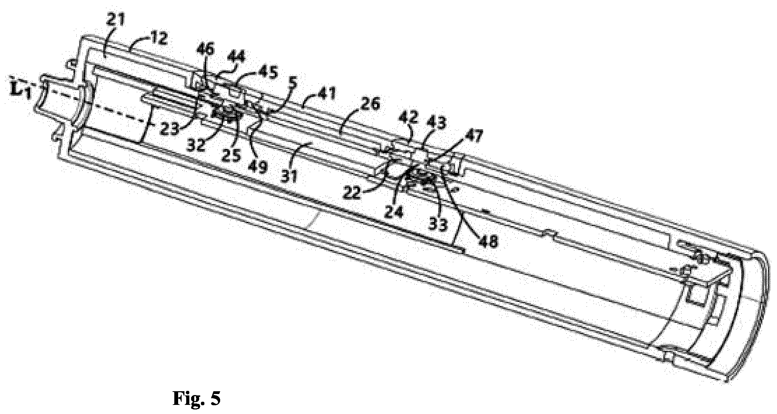

Corresponding to the gaps formed between the panel elastic portions 42, 44 and the inner switch elastic portions 22, 23, as shown in FIG. 5, the panel pressing blocks 46 and 47 protrude relative to inside surfaces of the panel elastic portions 42 and 44 inside the outer housing portion 1. The protrusion of the pressing blocks 46, 47 makes inside surfaces of the panel pressing blocks 46 and 47 adjacent to or in contact with outside surfaces of the inner switch pressing blocks 24, 25. In this case, the outside surfaces of the inner switch pressing blocks 24, 25 may be flush with outside surfaces of the inner switch elastic portions 42 and 44.

In an alternative embodiment, the outside surfaces of the inner switch pressing blocks 24 and 25 may be configured to protrude relative to the outside surfaces of the inner switch elastic portions, and the inside surfaces of the panel pressing blocks 46 and 47 may be flush with the inside surfaces of the panel elastic portions 42 and 44. Alternatively, in still another alternative embodiment, the inner switch pressing blocks 24 and 25 and the panel pressing blocks 46 and 47 both protrude relative to the respective elastic portions.

In the above various embodiments of the pressing blocks, it can be understood that the sum of the protrusions of each inner switch pressing block 24, 25 and the panel pressing block 46, 47 in contact therewith relative to the surfaces of the respective elastic portions corresponds to the size of the gap between two adjacent elastic portions.

In a preferred embodiment, the panel 4 is fixed to the inner housing portion 2. Preferably, the panel body 41 is adhesively fixed to the inner housing body 21 by means of a double-sided adhesive layer 5.

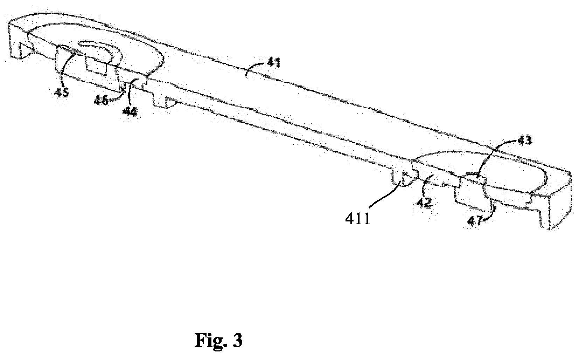

Preferably, as shown in FIG. 3, the panel body 41 is integrally provided with ribs 411 on the inner side facing the inner housing portion 2, which ribs 411 protrude relative to the inside surfaces of the panel elastic portions 42, 44. The fixing of the panel 4 with respect to the inner housing portion 2 is achieved by bonding or ultrasonic welding of the ribs 411 to the inner housing body 21. In this case, the double-sided adhesive layer 5 may have a shape corresponding to the ribs 411. For example, as shown in FIG. 5, the double-sided adhesive layer 5 has an outer contour corresponding to the panel, and two circular holes corresponding to the elastic portions 22 and 23 and a rectangular hole corresponding to the transparent piece 26 are formed in the double-sided adhesive layer, with the ribs 411 on the panel body having shapes consistent therewith.

In an alternative embodiment, the panel 4 may be fixed together with the inner housing body 21 by an ultrasonic welding process.

In the above preferred embodiments, the switch assembly includes the panel elastic portions 42, 44 and the inner switch elastic portions 22, 23, and a gap 48 is provided between the panel elastic portion 42 and the inner switch elastic portion 22 and a gap 49 is provided between the panel elastic portion 44 and the inner switch elastic portion 23, more specifically, the gap 48 is provided between the panel elastic portion 42 and the inner switch elastic portion 22 at least in a region facing the switch 33, and the gap 49 is provided between the panel elastic portion 44 and the inner switch elastic portion 23 at least in a region facing the switch 32, so that the thickness of each of the sheet-like elastic portions among the panel elastic portions 42, 44 and the inner switch elastic portions 23, 22 is advantageously reduced. Since the traditional thick single layer of elastic material is replaced with two thin layers of elastic material superposed with a gap, the pressing force on the two layers of elastic material superposed with a gap is significantly smaller than the pressing force on the thick single layer of elastic material under the same displacement, thereby reducing the pressing force required by a user to operate the switch.

Moreover, when the panel pressing blocks 46, 47 and the inner switch pressing blocks 24, 25 are in a pressed state, the pressing blocks 46, 47, 24, 25 themselves have little or no deformation, so that the pressing force can be transmitted directly and effectively to the switches 32, 33. Generally, the spacings between the panel pressing blocks 46, 47 and the inner switch pressing blocks 25, 24 are less than 0.5 mm without force being applied. Preferably, the panel pressing blocks 46, 47 engage with the inner switch pressing blocks 25, 24 respectively but do not deform the elastic portions 22, 23, 42, 44. This will facilitate the effective transmission of the pressing force, that is applied to the symbol portions 45, 44 on the panel, to the switches 32, 33, so that the operations on the switch can be carried out reliably and without error, and the sensitivity of the switches 32, 33 is guaranteed.

In a preferred embodiment, the panel body 41, the inner housing body 21, the outer housing body 12, the panel pressing blocks 46, 47, and the inner switch pressing blocks 25, 24 may be made of one or more materials that are relatively hard. These materials will not be deformed significantly under normal hand-held operation. In contrast, the panel elastic portions 42, 44 and the inner switch elastic portions 22 and 23 are made of a material that will be elastically deformed under normal hand-held operation.

The elastic material of the inner switch elastic portions 22 and 23 is generally elastic TPE, TPR, polyamide, etc. The relatively hard material of the inner housing body 21 and the outer housing body 12 is generally plastic such as ABS, PC, polymethyl methacrylate, etc.

In a manufacturing process of the waterproof panel assembly according to a preferred embodiment, the inner housing body 21, the inner switch elastic portions 22, 23 and the inner switch pressing blocks 25, 24 are preferably formed as one integral component by injection molding. Generally, the inner housing body 21 is injection molded first, and then the inner switch elastic portion 22, the inner switch elastic portion 23 and the inner transparent portion 26 are further injection molded on the basis of the already formed inner housing body 21. Preferably, as shown in FIG. 5, the inner switch pressing blocks 24, 25 and the inner housing body 21 are formed integrally from the same material in one injection molding step. In this case, it can be considered that the inner switch pressing blocks 24, 25 are parts integrally connected to the inner housing body 21, which parts are movable relative to the rest of the inner housing body 21 as the elastic portions 22 and 23 are elastically deformed. When the inner housing portion 2 has been injection molded, the outer housing portion 1 is injection molded on the basis of the inner housing portion 2 so that the inner housing portion 2 and the outer housing portion 1 are formed as a whole.

Moreover, as shown in FIGS. 3 and 5, the panel 4 is also formed as an integral watertight component by an injection molding process. Preferably, the panel pressing blocks 46, 47 and the panel body 41 may be injection molded first using the same or different hard materials, while the panel pressing blocks 46 and 47 form the symbol portions 43 and 45 configured for identification on the outer side of the panel.

The panel pressing blocks 46, 47, the symbol portions 43, 45 and the panel body 41 are not connected to each other, the panel pressing blocks 46 and 47 protrude relative to the inside surfaces of the panel elastic portions 42 and 44 inside the outer housing portion 1. During the injection molding process, the panel pressing blocks 46, 47 are formed by injection molding into corresponding blind holes in a mold. The panel pressing blocks 46, 47 are always fixed in the corresponding blind holes in the mold when the panel elastic portions 42, 44 are injection molded, thereby ensuring that the panel pressing blocks 46, 47 and the symbol portions 43, 45 are not deformed, distorted and displaced by the impact of the injection molding pressure. Precisely because the panel pressing blocks 46 and 47 protrude relative to the inside surfaces of the panel elastic portions 42 and 44 inside the outer housing portion 1, the panel pressing blocks 46, 47 are always fixed in the corresponding blind holes in the mold when the panel elastic portions 42, 44 are injection molded, making the injection molding process of the panel more reliable and stable. The formed panel pressing blocks 46, 47 and the panel body 41 are then injection molded with the material of the panel elastic portions 42 and 44, so that the panel elastic portions 42 and 44 envelop the panel pressing blocks 47, 46 and form integrally with the panel body 41.

The panel and switch assembly according to the present invention has excellent water tightness. Since the display screen 31 is mounted on the circuit board 3 and is located inside the inner housing portion 2, and the inner housing portion 2 is made as an integral piece by injection molding, an external fluid cannot enter the inner housing 2 through the panel hole 11 of the outer housing portion 1, so that the fluid cannot contact the display screen located inside, and the normal operation of the display screen can be protected. Moreover, elastic button portions for actuating the switches 32, 33 on the circuit board 3 are formed by two thin elastic portions superposed with a gap, respectively, and the pressing force required is significantly reduced compared to a single layer of thick elastic material.

For an application such as an electric toothbrush, the outer housing portion 1 is formed as a cylindrical or tubular handle portion, and thus has an arc-shaped contour. Since the inner housing portion 2 forms an integral waterproof structure in a region covering the switches and the display screen, the connection between the panel 4 and the outer housing portion 1 does not require high waterproofness, and the inner housing portion 2 can reliably guarantee the waterproof effect of the handle even if there is a gap. By the inner housing portion 2 forms an integral waterproof structure in the region covering the switches and the display screen, it is meant that the fluid cannot enter the interior of the inner housing portion 2 from the hole 11 in the outer housing body 12. The above description is to be regarded as merely an illustration of the principles of the present invention, and other variations are possible. For example, the number of switches is not limited to two, and may be one or more than two, the inner housing portion and the outer housing portion are not limited to be cylindrical, and the shape of the panel can vary according to the shape of the outer housing portion and the shape and arrangement of the display screen and the switches. Since many modifications and changes would have readily occurred to a person skilled in the art, it is not intended to limit the present invention to the precise constructions and operations shown and described herein. Although the preferred embodiments have been described, the details may be changed without departing from the scope of the present invention as defined by the claims.

## Claims

1. A waterproof panel and switch assembly for a personal care appliance, comprising:
an outer housing portion (1), which comprises an outer housing body (12) and a hole (11) formed in the outer housing body,
a panel (4), which comprises a panel body (41) and a panel elastic portion (46, 47) fixed to the panel body and is fitted in the hole (11),
an inner housing portion (2), which is arranged in the outer housing portion and comprises an inner housing body (21) and an inner switch elastic portion (22, 23) fixed to the inner housing body, and
a switch (32, 33), which is arranged in the inner housing portion,
wherein the panel (4) further comprises a panel pressing block (47, 46) enveloped by the panel elastic portion (42, 44), the panel elastic portion being connected to the panel pressing block and the panel body,
the inner housing portion (2) further comprises an inner switch pressing block (24, 25) enveloped by the inner switch elastic portion (22, 23), the inner switch elastic portion being connected to the inner switch pressing block and the inner housing body,
the panel pressing block and the inner switch pressing block are aligned with each other, and the inner switch pressing block and the switch are aligned with each other,
wherein a gap exists between the panel elastic portion and the inner switch elastic portion when the panel elastic portion of the panel is not subjected to a pressing force.

2. The waterproof panel and switch assembly according to claim 1, wherein
a distance between the panel pressing block and the inner switch pressing block is less than 0.5 mm or the panel pressing block abuts against the inner switch pressing block when the panel elastic portion (42, 44) of the panel (4) is not subjected to force.

3. The waterproof panel and switch assembly according to claim 1 or 2, wherein the panel pressing block (46, 47) protrudes relative to an inside surface of the panel elastic portion (42, 44), and/or the inner switch pressing block (24, 25) protrudes relative to an outside surface of the inner switch elastic portion (22, 23).

4. The waterproof panel and switch assembly according to claim 1, wherein the panel (4) is bonded or ultrasonically welded to the inner housing body (21) of the inner housing portion.

5. The waterproof panel and switch assembly according to claim 1, wherein the panel pressing block and/or the inner switch pressing block are made of a first material, and the panel elastic portion and the inner switch elastic are made of a second elastic material different from the first material,
wherein the first material is substantially not deformed under the action of a force for operating the switch.

6. The waterproof panel and switch assembly according to claim 1, wherein the panel pressing block (46, 47) forms an identification symbol on an outer side of the panel,
the panel pressing block (46, 47) and the panel body (41) are not connected to each other, and/or
the inner switch pressing block is attached to the inner housing body.

7. The waterproof panel and switch assembly according to claim 1, further comprising a circuit board (3) on which the switch (32, 33) is mounted, the circuit board being arranged in the inner housing portion.

8. The waterproof panel and switch assembly according to claim 7, wherein a display screen (31) is further mounted on the circuit board (3),
the inner housing portion (2) further comprises an inner transparent portion (26) at a position corresponding to the display screen, and the panel body is made of a transparent material.

9. The waterproof panel and switch assembly according to claim 1, wherein the inner housing portion (2) further comprises an inner transparent portion (26),
the inner transparent portion is integrally injection molded with the inner housing body, and
the inner housing body, the inner switch elastic portion, the inner switch pressing block and the inner transparent portion are injection molded to form a waterproof and sealed integral piece at a position corresponding to the hole of the outer housing portion (1).

10. The waterproof panel and switch assembly according to claim 1, wherein the panel body, the panel elastic portion and the panel pressing block are injection molded to form a watertight integral piece.
